# EUROPEAN PATENT SPECIFICATION

(11) **EP 0 598 629 B1**
(45) Date of publication and mention of the grant of the patent: **13.03.1996**
(21) Application number: 93309252.0
(22) Date of filing: 19.11.1993
(51) Int. Cl.: H02G 7/18, B60P 3/00

(54) **Trailer-mounted netting support system**
Auf einen Anhänger angeordneter Netzträger
Dispositif de support de filet monté sur une remorque

(30) Priority: 19.11.1992 GB 9224234
(43) Date of publication of application: 25.05.1994
(73) Proprietor: POWER LINES, PIPES & CABLES LIMITED, Carluke, Lanarkshire ML8 4PG (GB)
(72) Inventor: Harrison, Douglas, Nemphlar, Lanark, ML11 9JB (GB)
(74) Representative: Pacitti, Pierpaolo A.M.E.

(56) References cited:
- WO-A-91/05684
- DE-A- 2 813 610

## Description

### "Trailer-Mounted Netting Support System"

The present invention relates to apparatus for suspending netting above the ground, and is particularly but not exclusively concerned with suspending safety netting across roadways during the construction and/or maintenance of electric power lines.

When electric power lines are being constructed or maintained, it is necessary to suspend safety netting beneath the lines where they cross roadways, at a height sufficient to permit the free passage of traffic below. Typically, the net is supported by a number of parallel cables extending across the required span, the cables and net being supported at the required height by scaffolding erected at either side of the roadway, see for example DE-A-2 813 610. The assembly of the scaffolding and the suspension of the cables and net are necessarily time consuming and disruptive to traffic.

It is an object of the present invention to provide apparatus allowing safety netting to be temporarily installed across roadways more quickly and with less disruption to traffic than has hitherto been possible.

According to the present invention there is provided apparatus for supporting a safety net above the ground, comprising a trailer upon which are mounted upwardly extendible first and second support members, said support members being interconnected by a net support beam which is aligned substantially longitudinally with respect to the trailer, and the height of which may be varied by adjustment of the support members.

Preferably, the support members are substantially vertical.

Preferably, the support members are located adjacent either end of the trailer.

Preferably, the support members are retractable to a minimum height for storage and/or travel, and extendable up to a predetermined maximum height in use.

Preferably, the support members are operated by use of hydraulics.

Preferably, the support members are of telescopic construction.

Preferably, the support members provide anti-climbing devices.

Preferably, the net support beam is substantially horizontal in use.

Preferably, the net support beam is of substantially circular cross section.

Preferably, at least some portion of the net support beam provides a low friction surface.

Preferably, the net support beam provides means to which a net or net supporting cables may be attached.

Preferably, there is a gantry attached to the net support beam.

Preferably, the apparatus provides substantially horizontal net storage means.

Preferably, the net storage means is attached to the net support beam.

Preferably, a pair of pieces of apparatus according to the present invention are used, being spaced apart with the net supporting beams being substantially parallel and a net being supported by both beams and extending in a span above the ground between said beams.

A single piece of apparatus as described above may be used to protect a small area from the possible descent of cables by raising the net support beam above and/or adjacent to the area to be protected.

The invention also provides methods of protecting an area from the possible descent of overhead wires.

Embodiments of the invention will now be described, by way of example only, with reference to the accompanying drawings in which:-
Fig. 1 is a schematic side view of a trailer equipped with apparatus, in accordance with the present invention;
Fig. 2 is a schematic end view of the trailer of Fig.1;
Figs. 3A, 3B and 3C are, respectively, detail side and end views of a portion of the apparatus of Figs. 1 and 2;
Fig. 4 is a schematic plan view of apparatus in accordance with the invention in use;
Fig. 5 is a schematic top view of the apparatus in use in Fig. 4;
Fig. 6 is a schematic side view of a second embodiment of a trailer equipped with apparatus in accordance with the present invention;
Fig. 7 is a schematic end view of the trailer of Fig. 6;
Fig. 8 is a schematic end view of the gantry arrangement of the trailer of Figs. 6 and 7; and
Fig. 9 is a schematic plan view of a pair of trailers of the type shown in Figs. 6 and 7 in use.

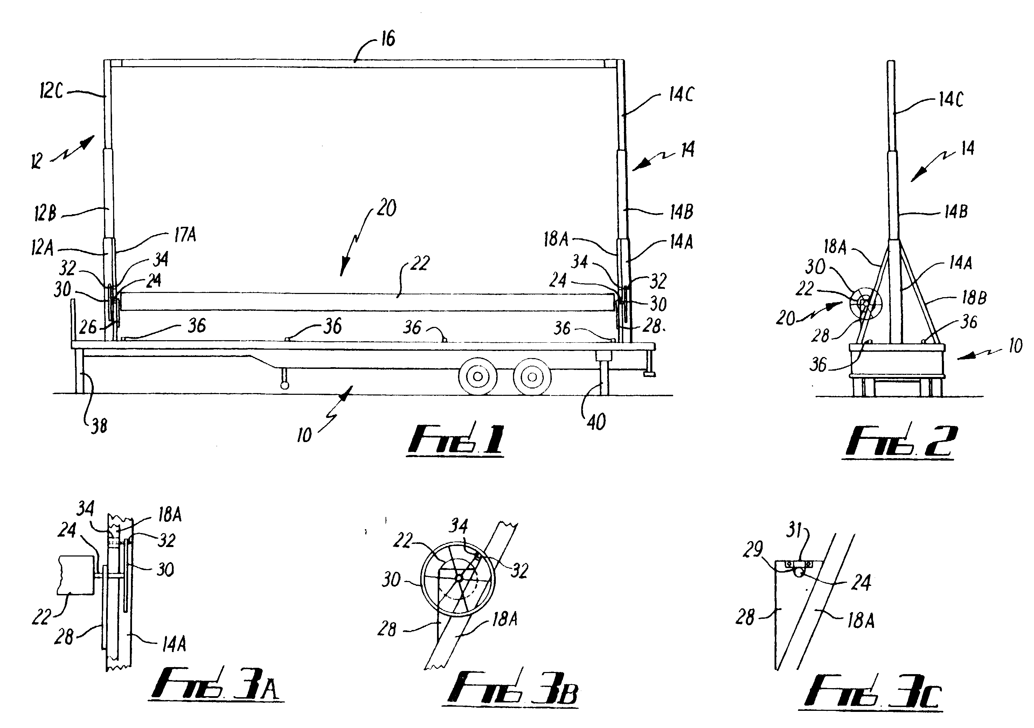

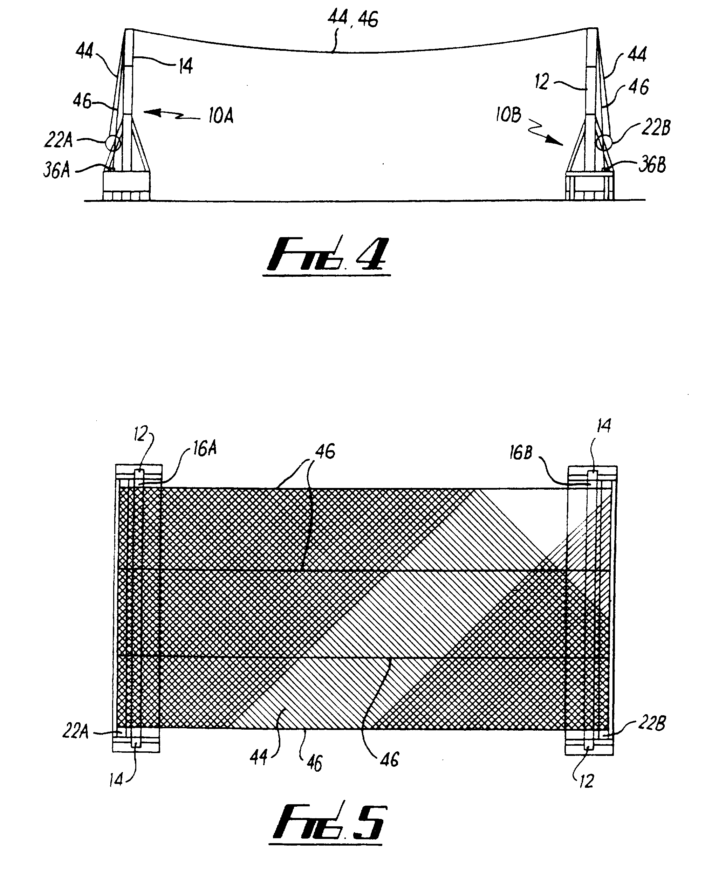

Referring now to Figs. 1, 2, 3A, 3B and 3C of the drawings, apparatus in accordance with the invention is based upon a trailer, generally designated 10, which may be a standard fifty foot trailer unit adapted for the purpose. First and second vertically extendable support members 12 and 14 are located adjacent either end of the trailer 10, the upper ends of the support members 12 and 14 being interconnected by a horizontally extending net support member 16, which is preferably circular in section with a low-friction surface. The vertical members 12, 14 may be retracted for travel/storage, and extended up to a predetermined maximum height (as illustrated) for use.

In the illustrated embodiment, each of the vertical support members 12, 14, comprises a hydraulically actuated, telescopic assembly, comprising three square section portions 12A, 12B, 12C and 14A, 14B, 14C, extendable to a maximum height of 8.7 meters. The lowermost portions 12A, 14A are braced by diagonal struts 17A, 17B and 18A, 18B.

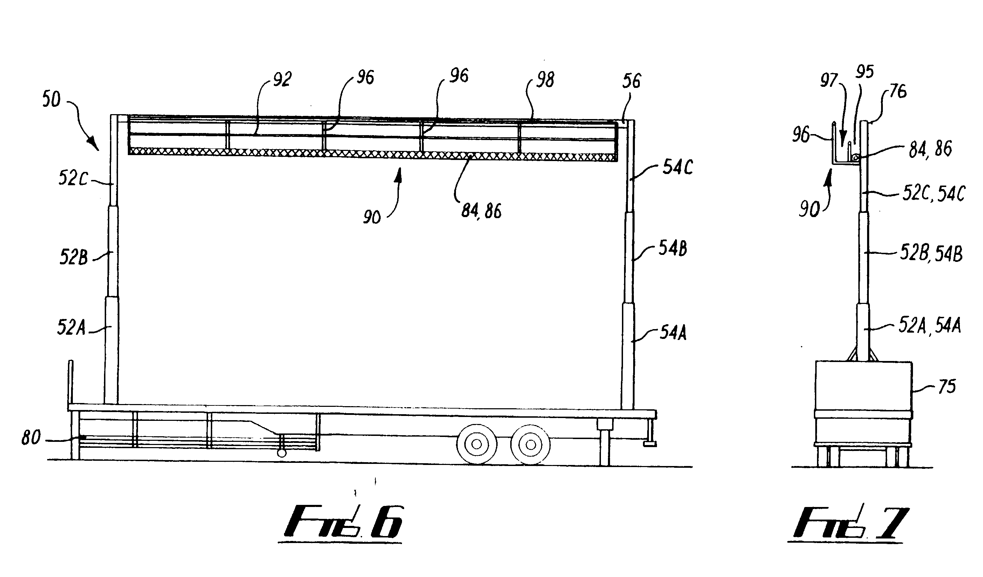

Mounted between struts 17A and 18A is a roller assembly 20, comprising a cylindrical mandrel 22 on a shaft 24, rotatably mounted between first and second yoke plates 26, 28 affixed to the struts 17A, 18A. A hand-wheel 30 is attached to either end of the shaft 24 for rotation of the mandrel 22. The mandrel 22 may be locked in a selected position by means of locking pins 32 removably insertable in sockets 34 mounted upon the struts 17A, 18a and extending through the handwheel 30 to engage the spokes thereof. Any other suitable locking arrangement might also be employed, such as a ratchet and pawl mechanism. The shaft 24 is removably located in notches 29 formed in the yoke plates 26, 28, and retained in position by removable locking bars 31 (see Fig. 3C).

A plurality of cable anchoring points 36 are also provided on the bed of the trailer 10, preferably arranged in two rows on either side of the vertical supports 12, 14. The trailer 10 may be stabilised, in use, by first and second pairs of legs or jacks 38, 40 adjacent either end thereof.

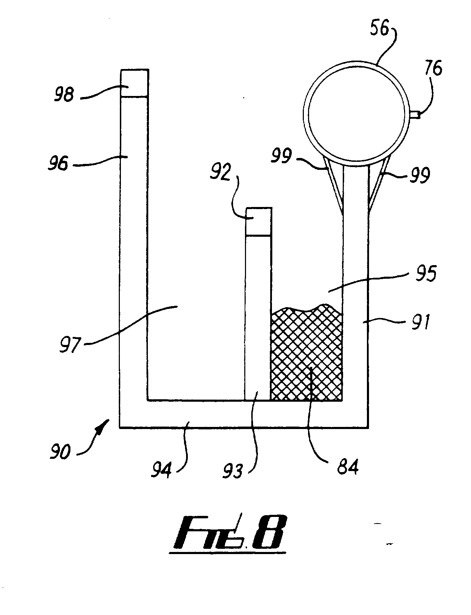

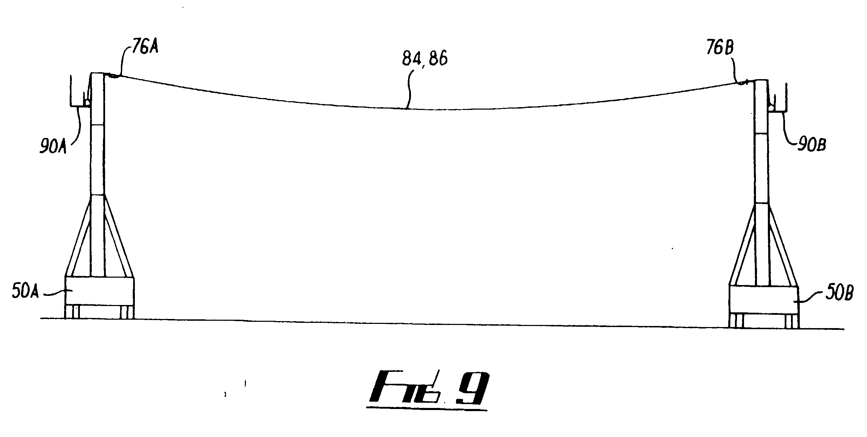

Referring now to Figs. 4 and 5, in use, first and second trailers 10A and 10B as described above are located on either side of a roadway. A net 44 to be suspended over the roadway is initially wound upon the mandrel 22A of the first trailer 10A, and cables 46 are initially stowed on the first trailer and secured to the anchoring points 36A thereof. The cables 46 are led over the top of the first horizontal member 16A, across the roadway, over the top of the second horizontal member 16B, and are secured to the anchoring points 36B of the second trailer 10B. The cables 46 are tensioned by any suitable means, such as conventional tensioning devices incorporated in the cables or by electric winches located at the anchoring points 36.

The net 44 is then unwound from the first mandrel 22A, over the top of the first horizontal member 16A, across the roadway supported by the cables 46, over the second horizontal member 16B, and is wound onto the second mandrel 22B. Alternatively, the net 44 may simply be secured to the bed of the second trailer 10B, in which case only the first trailer 10A need be equipped with the roller assembly 20. The net 44 is tensioned by rotating the mandrel 22 and locking it at the desired position.

The apparatus thus allows safety netting to be installed across roadways and removed quickly and efficiently, with minimum disruption to traffic.

An alternative embodiment of apparatus according to the present invention will now be described with reference to Figs. 6 to 9. This embodiment differs from the embodiment of Figs. 1 to 5 mainly in that there is a gantry provided, attached to the net support beam and raisable with said beam, upon which the net is stored and upon which operators may be accommodated so as to have access to the net and accompanying equipment. The use of a gantry for storage of the net enables the roller assembly of the first embodiment to be dispensed with, so the roller assembly is not included in this embodiment.

The trailer, generally designated 50, may again be a standard type, suitably adapted, and again includes first and second extendable vertical support members 52, 54 located adjacent either end of the trailer 50. The upper ends of the support members 52, 54 are interconnected by a horizontally extending net support beam 56, which may be raised or lowered by extension or retraction of the support members as in the first embodiment.

Each of the net support members 52, 54 comprises a hydraulically actuated telescopic assembly comprising three square section portions 52A, 52B, 52C and 54A, 54B, 54C extendable to a predetermined maximum height. The telescopic assembly includes a hydraulic ram (not shown) and is arranged so that the ram can be activated to extend a first portion of the support members 52C, 54C which is then locked in place with respect to a second portion of the support member 52B, 54B. The ram can then be disengaged from the first portion of the support member 52C, retracted and adjusted so that it engages the second portion of the support member 52B, 54B. The ram can then be actuated so as to vertically extend the second portion of the support member 52B, 54B and since the first portion 52C, 54C is locked to the second portion 52B, 54B it is also raised.

This mode of operation allows a hydraulic ram to be used which need only be long enough to raise one portion of the telescopic support member at a time.

The net support beam 56 is circular in cross section, has a low-friction surface to allow a net to slide over it and is attached to, and supports, a gantry arrangement, generally designated 90.

The gantry arrangement is shown in detail in Fig. 8 and is divided longitudinally into two portions 95, 97. The first portion 95, being closer to the net support beam 56, is disposed for storage of a net 84 and accompanying cables or straps 86. A second portion 97 is disposed to accommodate one or more operators of the equipment. The first and second portions are separated by a rail 92 and supports 93 upon which the rail 92 is mounted.

The gantry as a whole 90 is made up from box section steel and comprises a framework comprising parallel vertical members 91 which are attached to the net support beam 56, said attachment being reinforced by reinforcing members 99. The framework also comprises parallel horizontal members 94 which provide the base of the gantry 90, upon which the net may be stowed and which support a platform upon which operators may be accommodated. A second set of vertical members 96 interconnected by a rail 98 constitutes a safety rail at the side of the gantry away from the net support beam 56. A further set of vertical members 93 parallel to, and positioned between, the first and second sets of vertical members 91, 96 and also mounted on the horizontal members 94 serves to divide the portion of the gantry provided for net storage 95 from the side provided for operator accommodation 97.

In this embodiment, net fixing points 76 are provided on the net support beam 56 rather than on the base of the trailer.

The embodiment shown in Fig. 6 also includes crash barriers 80 which extend from the trailer 50 towards the ground. In use crash barriers 80 would be provided along the entire length of the trailer 50. The barriers could be permanently attached in position or could be attached suitably for removal or retraction during transit. Conspicuously painted crash barriers would help to prevent accidental collision of moving vehicles with the trailers 50 when the trailers are in use at the sides of a road. Should an accident occur, the crash barriers help to reduce the amount of damage caused.

Additional features can also be incorporated to increase the safety of the trailers in use. For example anti-climbing brackets can be included on the lowest portion of the vertical support members 52A, 54A in order to prevent unauthorised persons, particularly children, climbing the support members. An additional safety feature would be the boxing in of the lower portion of the trailer which would prevent unauthorised persons climbing onto the trailer base. Steel sheeting would be suitable for the boxing 75 which is illustrated in Fig. 7.

The use of a gantry 90 mounted on the net support beam 56 allows the entire net, in use, to be raised well above the trailer base. This gives a safety advantage over trailers of the earlier described embodiment on which the net extends from a mandrel mounted just above the trailer base, up to the net support member. The earlier configuration provides an almost vertical net which may be perceived to be similar to cargo nets used on assault or obstacle courses, which could provoke attempts to climb the net.

An additional benefit of having the net stored in this way rather than on a mandrel is that the net can be erected even where it is not possible for the trailers to be erected parallel to each other or where the net is not required to cross the span at right angles to the orientation of the trailers.

In use a pair of trailers 50A, 50B would be positioned such that netting supported between them would be in the desired position. Several nylon straps would then be attached to the net support member 56 of each trailer via the fixing points 76 such that the straps run approximately parallel to each other. Preferably there would be straps proximate to each end of each of the net support beams 56. The straps would be pulled to the desired tension by standard tensioning/locking devices.

The net to be suspended may now be spread over the straps. The net is stored in the appropriate portion 95 of the gantry of one of the trailers 50A. Its leading edge is raised, passed over the net support beam 56 and attached, at either edge to the straps nearest the ends of the beams. This attachment is done using a karabiner type clip which may run along the strap to which it is attached. The net is then pulled from the trailer 50A, across the straps towards the other trailer 50B. It is secured to the outer straps so it cannot fall.

When the net reaches the second trailer it is attached to the net fixing points 76 mounted on the net support beam 56. The net can then be tensioned by manually pulling it and/or by use of tensioning/locking devices at both trailers. Any excess length of net can remain in the storage portion of the gantry 95.

When the net is no longer required in position it can be detached from the second trailer 50B and manually pulled back to the trailer where it was originally stored. The straps can be released and packed and the supporting members 52, 54 retracted, lowering the net support beam. Thus the erection and taking down of safety netting is greatly expedited over the previously used methods using scaffolding.

Improvements and modifications may be incorporated without departing from the scope of the invention.

## Claims

1. Apparatus for supporting a safety net (44;84) above the ground, comprising a trailer (10;50) upon which are mounted upwardly extendible first (12;52) and second (14;54) support members, said support members (12,14;52,54) being interconnected by a net support beam (16;56) which is aligned substantially longitudinally with respect to the trailer (10;50), and the height of which may be varied by adjustment of the support members (12,14;52,54).

2. Apparatus as claimed in Claim 1 wherein the support members (12,14;52,54) are substantially vertical.

3. Apparatus as claimed in either of the preceding Claims wherein the support members (12,14;52,54) are located adjacent either end of the trailer (10;50).

4. Apparatus as claimed in any one of the preceding Claims wherein the support members (12,14;52,54) are retractable to a minimum height for storage and/or travel, and extendable up to a predetermined maximum height in use.

5. Apparatus as claimed in any one of the preceding Claims wherein the support members (12,14;52,54) are operated by use of hydraulics.

6. Apparatus as claimed in any one of the preceding Claims wherein the support members (12,14;52,54) are of telescopic construction.

7. Apparatus as claimed in any one of the preceding Claims wherein the support members (12,14;52,54) provide anti-climbing devices.

8. Apparatus as claimed in any one of the preceding Claims wherein the net support beam (16;56) is substantially horizontal in use.

9. Apparatus as claimed in any one of the preceding Claims wherein the net support beam (16;56) is of substantially circular cross section.

10. Apparatus as claimed in any one of the preceding Claims wherein at least some portion of the net support beam (16;56) provides a low friction surface.

11. Apparatus as claimed in any one of the preceding Claims wherein the net support beam (56) provides means (76) to which a net or net supporting cables may be attached.

12. Apparatus as claimed in any one of the preceding Claims wherein there is a gantry (90) attached to the net support beam (56).

13. Apparatus as claimed in any one of the preceding Claims wherein the apparatus provides substantially horizontal net storage means (20;95).

14. Apparatus as claimed in Claim 13 wherein the net storage means (95) is attached to the net support beam (50).

15. A method of protecting an area from the possible descent of overhead wires in which a net (44;84) is supported above the area to be protected between two beams (16;56), each beam being aligned longitudinally with respect to a respective trailer (10;50), where each beam (16;56) is mounted on two respective support members (12,14;52,54) which are attached to the respective trailers (10;50), and said beams (16;56) may be raised or lowered by adjustment of their respective members (12,14;52,54).

16. A method of protecting an area from the possible descent of overhead wires in which a beam (16;56) is mounted on first (12;52) and second (14;54) support members and may be raised or lowered by adjustment of said members (12,14;52,54) and in which the first and second support members are located adjacent either end of a trailer (10;50), and said beam (16;56) is suspended at a height above, and adjacent to, the area to be protected.

## Patentansprüche

1. Vorrichtung zum Tragen eines Sicherheitsnetzes (44; 84) oberhalb des Bodens, bestehend aus einem Anhänger (10; 50), auf welchem nach oben verlängerbare erste (12; 52) und zweite (14; 54) Trägerkörper montiert sind, wobei die Trägerkörper (12, 14; 52, 54) durch einen Netzträgerbalken (16; 56) miteinander verbunden sind, der im wesentlichen in Längsrichtung in Bezug auf den Anhänger (10; 50) ausgerichtet ist und dessen Höhe durch eine Einstellung der Trägerkörper (12, 14; 52, 54) verändert werden kann.

2. Vorrichtung nach Anspruch 1, bei welchem die Trägerkörper (12, 14; 52, 54) im wesentlichen vertikal sind.

3. Vorrichtung nach einem der vorhergehenden Ansprüche, bei welcher die Trägerkörper (12, 14; 52, 54) neben jedem Ende des Anhängers (10; 50) angeordnet sind. sind.

4. Vorrichtung nach einem der vorhergehenden Ansprüche, bei welcher die Trägerkörper (12, 14; 52, 54) auf eine minimale Lager- und/oder Fahrthöhe zurückziehbar und im Gebrauch auf eine vorbestimmte maximale Höhe verlängerbar sind.

5. Vorrichtung nach einem der vorhergehenden Ansprüche, bei welcher die Trägerkörper (12, 14; 52, 54) durch Hydraulik betätigbar sind.

6. Vorrichtung nach einem der vorhergehenden Ansprüche, bei welcher die Trägerkörper (12, 14; 52, 54) eine Teleskopausbildung haben.

7. Vorrichtung nach einem der vorhergehenden Ansprüche, bei welcher die Trägerkörper (12, 14; 52, 54) Kletterschutzvorrichtungen bereitstellen.

8. Vorrichtung nach einem der vorhergehenden Ansprüche, bei welcher der Netzträgerbalken (16; 56) im Gebrauch im wesentlichen horizontal verläuft.

9. Vorrichtung nach einem der vorhergehenden Ansprüche, bei welcher der Netzträgerbalken (16; 56) einen im wesentlichen kreisförmigen Querschnitt aufweist.

10. Vorrichtung nach einem der vorhergehenden Ansprüche, bei welcher wenigstens ein Bereich des Netzträgerbalkens (16; 56) eine Oberfläche niedriger Reibung bereitstellt.

11. Vorrichtung nach einem der vorhergehenden Ansprüche, bei welcher der Netzträgerbalken (56) eine Einrichtung (76) bereistellt, an welcher ein Netz oder Netzträgerkabel befestigt werden können.

12. Vorrichtung nach einem der vorhergehenden Ansprüche, bei welcher an dem Netzträgerbalken (56) eine Kranbrücke (90) befestigt ist.

13. Vorrichtung nach einem der vorhergehenden Ansprüche, bei welcher die Vorrichtung eine im wesentlichen horizontale Netzlagereinrichtung (20; 95) bereitstellt.

14. Vorrichtung nach Anspruch 13, bei welcher die Netzlagereinrichtung (95) an dem Netzträgerbalken (50) befestigt ist.

15. Verfahren zum Beschützen eines Bereichs vor einer möglichen Wegnahme von Freileitungsdrähten, bei welchem ein Netz (44; 84) oberhalb des zu beschützenden Bereichs zwischen zwei Balken (16; 56) getragen ist, wobei jeder Balken bezüglich eines betreffenden Anhängers (10; 50) in Längsrichtung ausgerichtet ist, wo jeder Balken (16; 56) an zwei betreffenden Trägerkörpern (12, 14; 52, 54) montiert ist, die an den betreffenden Anhängern (10; 50) befestigt sind, und die Träger (16; 56) durch ein Einstellen ihrer betreffenden Körper (12, 14; 52, 54) angehoben oder abgesenkt werden können.

16. Verfahren zum Beschützen eines Bereichs vor einer möglichen Wegnahme von Freileitungsdrähten, bei welchem ein Balken (16; 56) an ersten (12; 52) und zweiten (14; 54) Trägerkörpern montiert ist und durch ein Einstellen der Körper (12, 14; 52, 54) angehoben oder abgesenkt werde kann und wobei erste und zweite Trägerkörper neben jedem Ende eines Anhängers (10; 50) angeordnet sind und der Träger (16; 56) in einer Höhe oberhalb und neben dem zu beschützenden Bereich aufgehängt ist.

## Revendications

1. Appareil pour supporter un filet de sécurité (44 ; 84) au-dessus du sol, comprenant une remorque (10 ; 50) sur laquelle sont montés un premier (12 ; 52) et un second (14 ; 54) éléments supports extensibles vers le haut, lesdits éléments supports (12, 14 52, 54) étant interconnectés par une poutre support de filet (16 ; 56) qui est alignée sensiblement longitudinalement par rapport à la remorque (10 ; 50), et dont la hauteur peut être modifiée par ajustement des éléments supports (12, 14 ; 52, 54).

2. Appareil selon la revendication 1 dans lequel les éléments supports (12, 14 ; 52, 54) sont sensiblement verticaux.

3. Appareil selon l'une quelconque des revendications précédentes dans lequel les éléments supports (12, 14 ; 52, 54) sont placés adjacents à l'une et l'autre des extrémités de la remorque (10 ; 50).

4. Appareil selon l'une quelconque des revendications précédentes dans lequel les éléments supports (12, 14 ; 52, 54) sont rétractables jusqu'à une hauteur minimale pour le stockage et/ou le déplacement, et sont extensibles jusqu'à une hauteur maximale prédéterminée en utilisation.

5. Appareil selon l'une quelconque des revendications précédentes dans lequel les éléments supports (12, 14 ; 52, 54) sont actionnés par hydraulique.

6. Appareil selon l'une quelconque des revendications précédentes dans lequel les éléments supports (12, 14 ; 52, 54) sont de construction télescopique.

7. Appareil selon l'une quelconque des revendications précédentes dans lequel les éléments supports (12, 14 ; 52, 54) réalisent des dispositifs anti-escalade.

8. Appareil selon l'une quelconque des revendications précédentes dans lequel la poutre support de filet (16 ; 56) est sensiblement horizontale lors de l'usage.

9. Appareil selon l'une quelconque des revendications précédentes dans lequel la poutre support de filet (16 ; 56) a une section transversale sensiblement circulaire.

10. Appareil selon l'une quelconque des revendications précédentes dans lequel au moins une partie de la poutre support de filet (16 ; 56) présente une surface à faible friction.

11. Appareil selon l'une quelconque des revendications précédentes dans lequel la poutre support de filet (56) comprend des moyens (76) auxquels un filet ou des câbles supports de filet peuvent être attachés.

12. Appareil selon l'une quelconque des revendications précédentes dans lequel une passerelle (90) est attachée à la poutre support de filet (56).

13. Appareil selon l'une quelconque des revendications précédentes dans lequel l'appareil comprend un moyen de stockage de filet (20 ; 95) sensiblement horizontal.

14. Appareil selon la revendication 13 dans lequel le moyen de stockage de filet (95) est attaché à la poutre support de filet (50).

15. Procédé de protection d'une zone contre la chute possible de câbles surplombants, dans lequel un filet (44 ; 84) est supporté au-dessus de la zone à protéger entre deux poutres (16 ; 56), chaque poutre étant alignée longitudinalement par rapport à une remorque respective (10 ; 50), dans lequel chaque poutre (16 ; 56) est montée sur deux éléments supports respectifs (12, 14 ; 52, 54) qui sont attachés aux remorques respectives (10 ; 50), et lesdites poutres (16 ; 56) peuvent être levées ou abaissées en ajustant leurs éléments respectifs (12, 14 ; 52, 54).

16. Procédé de protection d'une zone contre la chute éventuelle de câbles surplombants, dans lequel une poutre (16 ; 56) est montée sur des premier (12 ; 52) et second (14 ; 54) éléments supports et peut être élevée ou abaissée en ajustant lesdits éléments (12, 14 ; 52, 54) et dans lequel les premier et second éléments supports sont placés adjacents à l'une et l'autre des extrémités d'une remorque (10 ; 50), et ladite poutre (16 ; 56) est suspendue en hauteur au-dessus de, et adjacente à, la zone à protéger.
